# EUROPEAN PATENT APPLICATION

(11) **EP 1 640 137 A1**
(43) Date of publication of application: **29.03.2006**
(21) Application number: 04022868.6
(22) Date of filing: 24.09.2004
(51) Int. Cl.: B29C 47/00, B29C 47/10, B29C 47/76

(54) **Process for producing fiber reinforced plastic compounds**

(71) Applicant: Colbond B.V., 6827 AV Arnhem (NL)
(72) Inventor: van Vliet, Arie Hendrik Frans, 6814 Arnhem (NL)
(74) Representative: Oberlein, Gerriet H. R.

(57) **Abstract**

A process for continuously manufacturing fiber reinforced plastic compounds is proposed comprising the steps of
a) feeding a first stream of material to an extruder, wherein the said first stream of material comprises at least one fibrous component and at least one polymeric non-fibrous component,
b) optionally feeding a second stream of material to the extruder, wherein the said second stream contains at least one polymeric non-fibrous component,
c) melting the polymeric non-fibrous component(s) and mixing them with the fibrous component(s) in the extruder,
d) transporting the mixture obtained in step c) through the extruder, thereby optionally passing a degassing and/or a pressure building zone,
e) releasing the mixture obtained in step d) into a die,
wherein at least one of the fibrous components of the first stream of material is a waste fibrous component.

## Description

The invention pertains a process for continuously manufacturing fiber reinforced plastic compounds.

Such a process is described in e.g. WO99/56936. In this publication it is disclosed how one can use natural fibers as reinforcement for thermoplastic materials in a continuous process. The fiber and in most cases also the thermoplastic material of the WO99/56936 derive from raw materials, such as cellulosic fibers and polypropylene homopolymer.

Whereas the teaching of WO99/56936 enables to process virgin fibrous materials, there are difficulties in working with waste materials.
Many waste streams contain a mixture of thermoplastic material like PP and PE and fibrous material that may consist of the same or another type of thermoplastic material or non-thermoplastic fibers like cellulose fibers. The reprocessing of these materials is often not interesting for the following reasons:
- If the fibers do not melt at the processing temperature they will be included in the thermoplastic matrix and cause a severe embrittlement of the material.
- If the fibers are thermoplastic and melt with the main constituent the resulting blend is often of a poor quality because the two materials are not compatible.

In order to overcome these problems a process for continuously manufacturing fiber reinforced plastic compounds is being proposed comprising the steps of
a) feeding a first stream of material to an extruder, wherein the said first stream of material comprises at least one fibrous component and at least one polymeric non-fibrous component,
b) optionally feeding a second stream of material to the extruder, wherein the said second stream contains at least one polymeric non-fibrous component,
c) melting the polymeric non-fibrous component(s) and mixing them with the fibrous component(s) in the extruder,
d) transporting the mixture obtained in step c) through the extruder, thereby optionally passing a degassing and/or a pressure building zone,
e) releasing the mixture obtained in step d) into a die,

wherein at least one of the fibrous components of the first stream of material is a waste fibrous component.

In contrast to e.g. WO99/56936, where a separate addition of the fibers into the matrix material, as formed wholly or partially by the polymeric non-fibrous component, is described to obtain the reinforcement, the present invention can process waste materials of which the fibers are an integral part, in such a way that the fibers have a positive effect on the material properties rather than an adverse effect.

It is thus proposed to obtain a reinforcement effect on the matrix material with at least one fibrous component present as waste material together with a polymeric non-fibrous component, the latter forming - or being a part of - the matrix material. In most cases it is desirable if the first stream and or the optional second stream of material additionally comprises a compatibilizer. A compatibilizer is a substance, in many cases a dimer, oligomer or a polymer, that can be mixed with the polymer matrix, i.e. the non-fibrous component(s), and forms chemical coupling to the fibrous component. Useful compatibilizers for polyolefins and polystyrenes as polymeric non-fibrous component are disclosed e.g. in WO99/56936 and comprise maleic anhydride grafted polyolefin copolymers and maleic anhydride grafted polystyrene copolymers.

It is preferred for the inventive process that the extruder is a corotating twin-screw extruder. Such extruders are known in the art, e.g. from WO99/56936.

In one preferred embodiment the waste fibrous component in the first stream of material is a non-thermoplastic component selected from the group consisting of cellulosic fibers, aramid fibers and/or mixtures thereof.

In another preferred embodiment the waste fibrous component in the first stream of material is a thermoplastic component selected from the group consisting of polypropylene fibers, polyester fibers, polyamide fibers and/or mixtures thereof.

For the polymeric non-fibrous component(s) in the first stream of material it is preferred that this is a (or these are) thermoplastic component(s) selected from the group consisting of polyolefine, polystyrene, polyester, polyamide and/or mixtures thereof.
In those cases where also the waste fibrous component is a thermoplastic polymer, it must have a higher (at least 10 K) melting point than any of the polymeric non-fibrous component(s), either in the first or in the optional second stream of material.
Furthermore, it has to be taken care of that the processing temperature in the extruder remains below (at least 10 K) the melting point of the (thermoplastic) waste fibrous component.

In several cases the polymeric non-fibrous component in the first stream of material is also a waste component. The more so, if the first stream of material consists of waste composites, such as cellulosic fibers in a polyolefin matrix.
In those cases it is desirable to apply an optional second stream of materials, in order to better adjust the relationship between the waste fibrous component and the polymeric non-fibrous component. In principle, thus, also in this optional second stream of materials there can be present - if so desired - a waste fibrous component.
To this end it is preferred that the polymeric non-fibrous component in the optional second stream of material is a thermoplastic component selected from the group consisting of polyolefin, polystyrene, polyester, polyamide and/or mixtures thereof.

It is even more preferred, if the polymeric non-fibrous components in both the first stream of material and the optional second stream of material are the same.

The process is particularly beneficial in cases wherein the waste fibrous component consists of bicomponent fibers or filaments in form of a sheath-core, side-by-side or islands-in-the-sea structure.

To this end it is preferred that the waste fibrous component consists of bicomponent filaments of a higher melting polyethyleneterephthalate (PET) core and a lower melting polyamide (PA) and/or polypropylene skin. Melting point difference between core and skin should be at least 10 K.

In another preferred embodiment the waste fibrous component consists of cellulosic fibers or filaments.

For both the bicomponents and cellulosic fibers and filaments it is preferred to apply as polymeric non-fibrous material in the first stream of material and - if applicable also in the optional second stream of material - a polyolefin, such as polypropylene or polyethylene.

In case of the bicomponent fibrous component the desirable effect is that the PET core is separated from the skin and dispersed through the matrix giving a good reinforcement.

## Claims

1. Process for continuously manufacturing fiber reinforced plastic compounds comprising the steps of
a) feeding a first stream of material to an extruder, wherein the said first stream of material comprises at least one fibrous component and at least one polymeric non-fibrous component,
b) optionally feeding a second stream of material to the extruder, wherein the said second stream contains at least one polymeric non-fibrous component,
c) melting the polymeric non-fibrous component(s) and mixing them with the fibrous component(s) in the extruder,
d) transporting the mixture obtained in step c) through the extruder, thereby optionally passing a degassing and/or a pressure building zone, e) releasing the mixture obtained in step d) into a die,
wherein at least one of the fibrous components of the first stream of material is a waste fibrous component.

2. The process of claim 1, wherein the first stream of material and/or the optional second stream of material additionally comprises a compatibilizer.

3. The process of claims 1 or 2, wherein the extruder is a corotating twin-screw extruder.

4. The process of any of the preceding claims 1 to 3, wherein the waste fibrous component in the first stream of material is a non-thermoplastic component selected from the group consisting of cellulosic fibers, aramid fibers and/or mixtures thereof.

5. The process of any of the preceding claims 1 to 3, wherein the waste fibrous component in the first stream of material is a thermoplastic component selected from the group consisting of polypropylene fibers, polyester fibers, polyamide fibers and/or mixtures thereof.

6. The process of any of the preceding claims 1 to 5, wherein the polymeric non-fibrous component in the first stream of material is a thermoplastic component selected from the group consisting of polyolefine, polystyrene, polyester, polyamide and/or mixtures thereof.

7. The process of any of the preceding claims 1 to 6, wherein the polymeric non-fibrous component in the optional second stream of material is a thermoplastic component selected from the group consisting of polyolefine, polystyrene, polyester, polyamide and/or mixtures thereof.

8. The process of any of the preceding claims 1 to 7, wherein the waste fibrous component consists of bicomponent fibers or filaments in form of a sheath-core, side-by-side or islands-in-the-sea structure.

9. The process of claim 8, wherein the waste fibrous component consists of bicomponent filaments of polyethyleneterephthalate core and polyamide and/or polypropylene skin.

10. The process of any of the preceding claims 1 to 7, wherein the waste fibrous component consists of cellulosic fibers or filaments.

11. The process of claim 9 or 10, wherein the polymeric non-fibrous material in the first stream of material is a polyolefine.
